# EUROPEAN PATENT APPLICATION

(11) **EP 1 770 913 A1**
(43) Date of publication of application: **04.04.2007**
(21) Application number: 06019305.9
(22) Date of filing: 15.09.2006
(51) Int. Cl.: H04L 12/46, H04L 12/56

(54) **System and method for port mapping in a communications network switch**

(30) Priority: 29.09.2005 US 721670 P; 19.12.2005 US 311716
(71) Applicant: Alcatel Lucent, 75008 Paris (FR)
(72) Inventor: Subash, Bhora, CA 91377 Oak Park (US); Vincent, Margret, 91377 Oak Park (US); Steve, Valentine, CA 93012 Camarillo (US)
(74) Representative: Schäfer, Wolfgang

(57) **Abstract**

System and method for implementing a port mapping technique in a switch of a communications network, wherein the switch includes a plurality of ports including user ports and network ports, are described. In one embodiment, the method comprises identifying a first portion of the ports as user ports; identifying a second portion of the ports as network ports; assigning a plurality of the user ports to a first session; and preventing user ports assigned to the first session from interacting with one another.

## Description

### BACKGROUND OF THE INVENTION

### Technical Field of the Invention

The present invention generally relates to communications networks. More particularly, and not by way of any limitation, the present invention is directed to system and method for port mapping in switches of such networks.

### Description of Related Art

In the past, it has been common communications network engineering practice to separate traffic belonging to different users using a router, which is a Layer 3 ("L3") device by assigning each user to a different subnet identified by a unique L3 address. The router would then transmit each user's packets out through a port assigned to the user's subnet. In view of the fact that only a limited number of bits in the L3 address are used for the subnet mask, the number of subnets that may be addressed by a single router is limited.

It will be recognized that in a communications network, there are many users of the network who require that their traffic be kept absolutely separate from the traffic of other users. For example, an Internet service provider ("ISP") will typically have many customers who want to connect to a server farm. Access to the ISP is through a router connected to a common external computer network, such as the Internet. This router must route each customer's traffic to that customer's local area network ("LAN") in such a manner as to maintain security and privacy between the data of different customers. It is imperative that the ISP prevent traffic originating from one customer's server from being received by another customer's server. As previously indicated, a limitation in the use of subnets in this scenario is that there is only a limited number of subnets which can be defined from standard Layer 3 addresses. In modern computer network systems, this numerical limitation severely restricts the number of individual users that can be serviced and also have their data traffic maintained separately. Further, the management of a large number of subnets by a network manager quickly becomes burdensome, especially in the event that the network has thousands of customers whose packet traffic must be kept separate.

Another means by which users traffic may be kept separate is through use private Virtual Local Area Networks (VLANs) defined within a network switch, or bridge, which is a Layer 2 ("L2") device. A private VLAN is a VLAN feature in which access ports of a switch are allowed to communicate only with certain designated router ports. The security implementation with a Private VLAN is conducted at the hardware layer and does not allow for any frame of any sort to pass between adjacent access ports within a Private VLAN. Private VLANs provide port-based security and isolation between ports within the assigned VLAN. Data traffic on downlink ports can only be forwarded to, and from, uplink ports. A deficiency of private VLANs is that they can be difficult to configure and may not provide a complete solution in some cases.

### SUMMARY OF THE INVENTION

One embodiment is a method of implementing a port mapping technique in a switch of a communications network, wherein the switch includes a plurality of ports including user ports and network ports. The method comprises identifying a first portion of the ports as user ports; identifying a second portion of the ports as network ports; assigning a plurality of the user ports to a first session; and preventing user ports assigned to the first session from interacting with one another.

Another embodiment is a method of implementing a port mapping technique in a switch of a communications network, wherein the switch includes a plurality of ports. The method comprises identifying a first portion of the ports as user ports; identifying a second portion of the ports as network ports; assigning a plurality of the user ports to a first session; preventing user ports assigned to the first session from interacting with one another; and permitting the user ports assigned to the first session to interact with ports not assigned to the first session as long as none of the network ports is assigned to the first session.

Another embodiment is a system for implementing a port mapping technique in a switch of a communications network, wherein the switch includes user ports for connecting to user devices and network ports for connecting to network devices. The system comprises means for assigning a plurality of the user ports to a first session; and means for preventing user ports assigned to the first session from interacting with one another.

### BRIEF DESCRIPTION OF THE DRAWINGS

A more complete understanding of the present invention may be had by reference to the following Detailed Description when taken in conjunction with the accompanying drawings wherein:
- FIG. 1: is a block diagram of a switch in which a port mapping technique in accordance with one embodiment is implemented;
- FIG. 2: is a block diagram of a switch in which a port mapping technique in accordance with one embodiment is implemented;
- FIG. 3: is a block diagram of a communications network in which a port mapping technique in accordance with one embodiment is implemented;
- FIG. 4: is a block diagram of a communications network in which a port mapping technique in accordance with one embodiment is implemented;
- FIG. 5: is a block diagram of a communications network in which a port mapping technique in accordance with one embodiment is implemented;
- FIG. 6: is a block diagram of a communications network in which a port mapping technique in accordance with one embodiment is implemented;
- FIG. 7: is a flowchart of the operation of a port mapping technique in accordance with one embodiment for configuring a switch; and
- FIGs. 8A and 8B: illustrate port bitmap tables for respective switches of a network in which a port mapping technique in accordance with one embodiment is implemented.

### DETAILED DESCRIPTION OF THE DRAWINGS

Embodiments of the invention will now be described with reference to various examples of how the invention can best be made and used. Like reference numerals are used throughout the description and several views of the drawings to indicate like or corresponding parts, wherein the various elements are not necessarily drawn to scale.

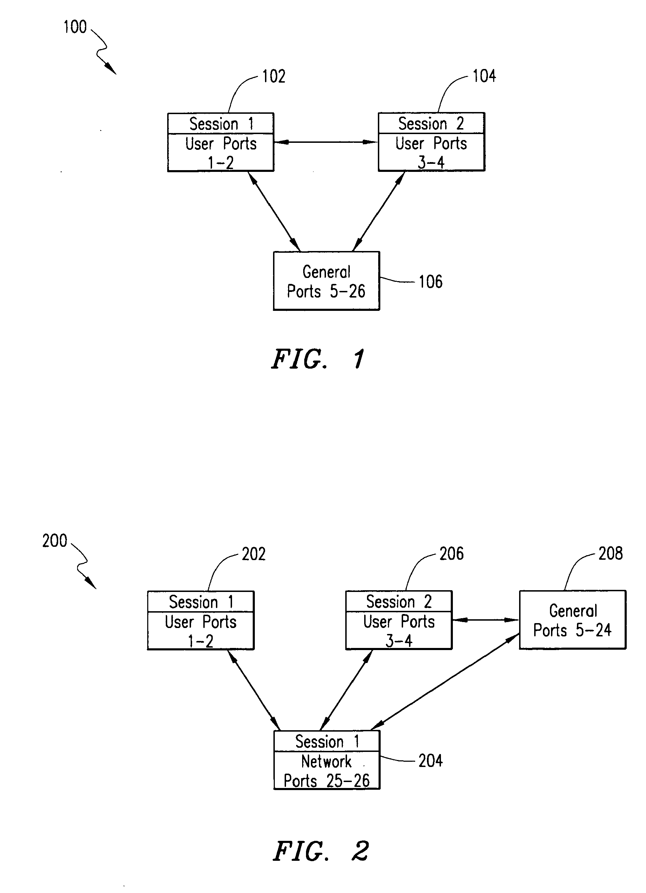

As will be described in detail hereinbelow, one embodiment is a system and method for port mapping in a communications network switch. In particular, the embodiments described herein distinguish between network ports (i.e., ports that connect a switch to other switches in a network) and user ports (i.e., ports to which user devices are connected to the switch) in connection with a port mapping session, identified by a session ID assigned to the port. In general, when only one side (i.e., user ports) of a session is created on a switch, the user ports of that session can communicate with any other ports on the switch, but not with each other. This situation is illustrated in FIG. 1. In particular, as shown in FIG. 1, two sessions (Session 1 and Session 2) are created on a switch 100. Session 1 user ports 102 are ports 1-2. Session 2 user ports 104 are ports 3-4. The remaining ports 5-26 are general ports 106. Because no network ports have been created for either Session 1 or Session 2, the Session 1 user ports 102 can communicate with the Session 2 user ports 104 and the general ports 106 on the switch 100. Similarly, the Session 2 user ports 104 can communicate with the Session 1 user ports 102 and the general port 106 on the switch 100. However, the Session 1 user ports 102 (ports 1 and 2) cannot communicate with one another; similarly, the Session 2 user ports 104 (ports 3 and 4) cannot communicate with one another. The general ports 106 (ports 5-26), on the other hand, are not similarly restricted and can communicate with one another.

When two sides (i.e., user ports and network ports) of a session are created on a single switch, the user ports in the session can communicate only with the network ports in the same session and with no other ports on the switch. The session thus forms a closed entity on the switch with respect to the user ports. This situation is illustrated in FIG. 2.

In particular, as shown in FIG. 2, two sessions (Session 1 and Session 2) are created on a switch 200. Session 1 user ports 202 are ports 1-2. Session 1 network ports 204 are ports 25-26. Session 2 user ports 206 are ports 3-4. The remaining ports 5-24 are general ports 208. Because network ports 204 have been created for Session 1, the Session 1 user ports 202 can communicate only with the Session 1 network ports 204. In contrast, the Session 2 user ports 206 can communicate with the Session 1 network ports 204 and with the general ports 208 on the switch 200. Once again, however, the Session 1 user ports 202 (ports 1 and 2) cannot communicate with one another; similarly, the Session 2 user ports 206 (ports 3 and 4) cannot communicate with one another. The network ports 204 and the general ports 208 (ports 5-26), on the other hand, are not similarly restricted and can communicate with one another.

In general, for user and network ports, the following rules are applied by the embodiments described herein for implementing port mapping using network and user ports.
1. A port mapping session comprises a session ID, a set of user ports, and/or a set of network ports.
2. A port mapping session can be configured with or without user ports and network ports.
3. User ports with a common session ID cannot communicate with each other.
4. A user port can be part of only one port mapping session at any time.
5. A user port cannot be a network port and vice versa.
6. If a set of network ports of a given session is non-empty, then any user ports of the same session can only communicate with members of that set of network ports.
7. If a session is configured as "bidirectional", the network ports of that session cannot communicate with other network ports of the same session.

The "closure" referred to above is primarily provided by rule 6, which prevents user ports from communicating with other ports in the system.

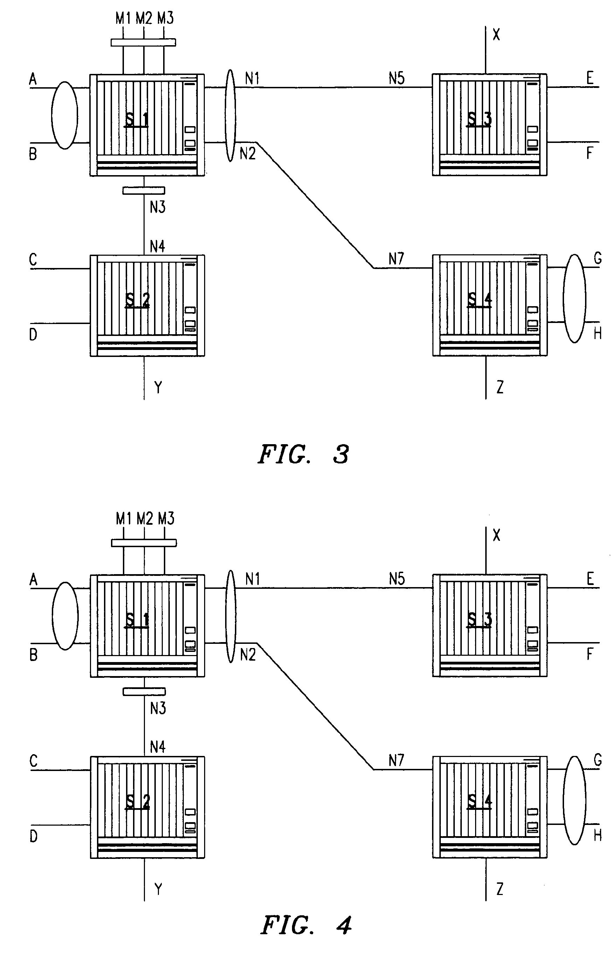

Application of the above-listed rules will now be illustrated in greater detail with reference to FIGs. 3-4. In particular, FIG. 3 illustrates a port mapping among four switches S1-S4 in a network 100 in accordance with one embodiment. The switch S1 has a plurality of user ports A, B, and M1-M3, as well as a plurality of network ports N1-N3. Similarly, the switch S2 has user ports C, D, and Y, and a network port N4. The switch S3 has user ports E, F, and X and a network port N5, and the switch S4 has user ports G, H, and Z, and a network port N7. It will be assumed for the sake of example, that the following port mapping sessions have been configured on the network 100 as illustrated in FIG. 3.
**On Switch S1:**
   Port Mapping Session 1 (Session ID=1): ports A and B are user ports; ports N1 and N2 are network ports configured in bidirectional mode
   Port Mapping Session 2 (Session ID=2): ports M1, M2, and M3 are user ports, port N3 is a network port
**On Switch S2:**
   Port Mapping Session 1 (Session ID=1): ports G and H are user ports, port N7 is a network port
   Based on the configuration shown in FIG. 3 and described above, the following is attained:
      1. User ports A and B cannot interact with one another (because they have the same session ID);
      2. User ports A and B cannot interact with ports on the switch S2 (because they can only communicate with network ports N1 (to switch S3) and N2 (to switch S4);
      3. User ports C, D, and Y can interact with all user ports on the network except user ports A and B on the switch S1 (for the same reasons as set forth above);
      4. User ports G and H cannot interact with each other (because they have the same session ID);
      5. User ports G and H can interact with all the user ports on the switch S1 except user ports M1, M2, and M3, but cannot interact with any port on the switch S3 (network port N7 (switch S4) is connected to network port N2 (switch S1), which is session ID 1 and therefore communicates with user ports A and B, but not M1, M2, and M3; network ports N1 and N2 cannot communicate with one another due to bidirectional session); and
      6. User ports E, F, and X can interact with all of the user ports on the switch S1 except the user ports M1, M2, and M3, but cannot interact with any port on the switch S4 (same reason as above).

Referring now to FIG. 4, it will be assumed for the sake of example, that the following port mapping sessions have been configured on the network 100 as illustrated in FIG. 4.
**On Switch S1**
   Port Mapping Session 1 (Session ID=1) : ports A and B are user ports; ports N1 and N2 are network ports configured in unidirectional mode.
   Port Mapping Session 2 (Session ID=2): ports M1, M2, and M3 are user ports; port N3 is a network port.
**On Switch S4**
   Port Mapping Session 1 (Session ID=1): ports G and H are user ports, port N7 is a network port.

Based on the foregoing configuration illustrated in FIG. 4 and described above, the following is attained:
1. User ports A and B cannot interact with one another (because they have the same session ID);
2. User ports A and B cannot interact with ports on the switch S2 (because they can only communicate with network ports N1 (to switch S3) and N2 (to switch S4);
3. User ports C, D, and Y can interact with all user ports on the network except user ports A and B on the switch S1 (for the same reasons as set forth above);
4. User ports G and H cannot interact with each other (because they have the same session ID);
5. User ports G and H can interact with all the user ports on the switch S1 except user ports M1, M2, and M3 (network port N7 (switch S4) is connected to network port N2 (switch S1), which is session ID 1 and therefore communicates with user ports A and B, but not M1, M2, and M3) and can interact with any port on switch S2 or switch S3 (network ports N1 and N2 can communicate with
6. User ports E, F, and X can interact with all of the user ports on the switch S1 except the user ports M1, M2, and M3 and can interact with any port on the switch S2 or the switch S3(same reason as above).

It will be recognized that if network ports N1, N2, and N3 are made part of both of the sessions on the switch S1 (i.e., sessions 1 and 2), which is configurable, then the ports N1, N2, and N3 will be able to interact with each other and the user ports C, D and Y on the switch S2 will be able to interact with all of the user ports on the switches S1, S3, and S4.

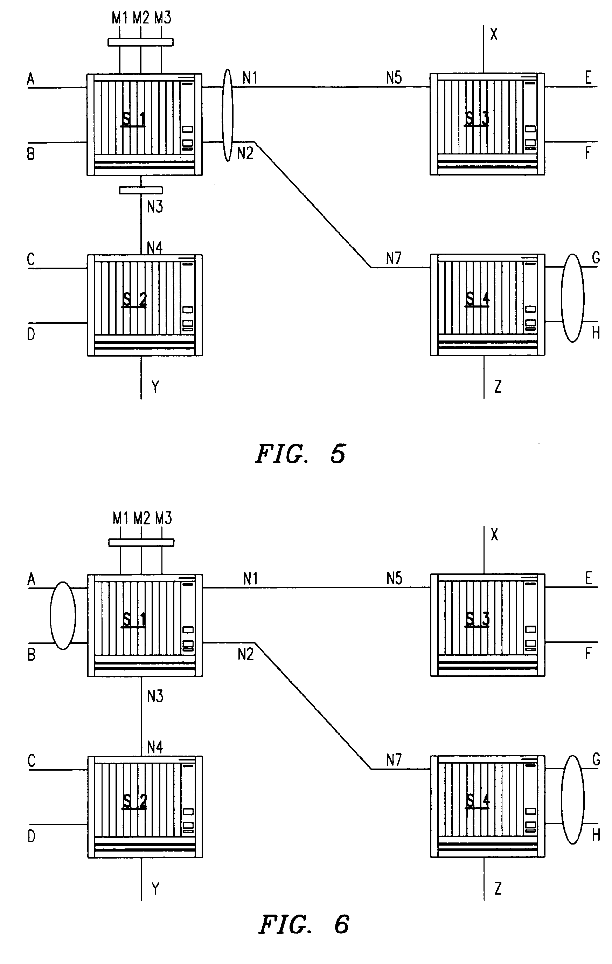

Referring now to FIG. 5, it will be assumed for the sake of example, that the following port mapping sessions have been configured on the network 100 as illustrated in FIG. 5.
**On Switch 1:**
   Port Mapping Session 1 (Session ID=1): ports N1 and N2 are network ports configured in bidirectional mode.
   Port Mapping Session 2 (Session ID=2): port N3 is a network port.
**On Switch 4:**
   Port Mapping Session 1 (Session ID=1): ports G and H are user ports.
Based on the foregoing, the following situation is attained:
   1. User ports A, B, M1, M2, and M3 can interact with one another (all are general ports with no session ID);
   2. The only restriction on the switch S1 is that network ports N1 and N2 cannot interact with one another (bidirectional session), thus restricting switches S3 and S4 from communicating with one another;
   3. User ports G and H on switch S4 cannot interact with one another (ports G and H have the same session ID) and cannot interact with ports on the switch S3 (due to inability of network ports N1 and N2 to interact with one another).

Referring now to FIG. 6, it will be assumed for the sake of example, that the following port mapping sessions have been configured on the network 100 as illustrated in FIG. 6.
**On Switch S1:**
   Port Mapping Session 1 (Session ID=1) : ports A and B are user ports.
   Port Mapping Session 2 (Session ID=2): ports M1, M2, and M3 are user ports.
**On Switch S4:**
   Port Mapping Session 1 (Session ID=1): ports G and H are user ports.

Based on the forgoing, the following situation is attained:
1. User ports A and B cannot interact with one another (same session ID).
2. User ports M1, M2, and M3 cannot interact with one another (same session ID).
3. User port A can interact with user ports M1, M2, and M3, and vice versa (different session IDs and no network port assigned to session).
4. User port B can interact with user ports M1, M2, and M3, and vice versa (same as above).
5. User ports G and H cannot interact with one another (same session ID).

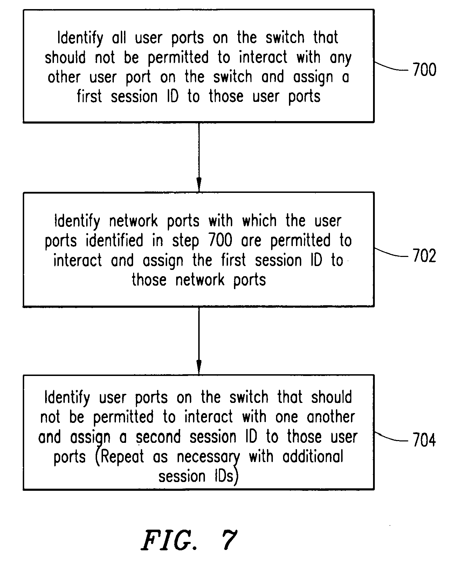

[FIG. 7 is a flowchart of the operation of the embodiments described herein for configuring a switch for implementation of port mapping using network and user ports. In step 700, a network administrator identifies all user ports on the switch that should not be permitted to interact with any other user port on the switch and assigns a first session ID to those user ports. In step 702, the network administrator identifies network ports with which the user ports identified in step 700 are permitted to interact and assigns the first session ID to those network ports. As a result, the only ports on the switch with which the user ports identified in step 700 are able to interact are the network ports identified in step 702.

In step 704, the network administrator identifies user ports on the switch that should not be permitted to interact with one another and assigns a second session ID to those user ports. Step 704 may be repeated for any number of groups of user ports that are not to be permitted to interact with one another, but are permitted to interact with user ports of other sessions, general ports, and network ports.

In one embodiment, the rules are implemented by establishing the allowed ports by bitmap tables within generally available application specific integrated circuits ("ASICs") in the switches. The configuration is managed so that the desired behavior is attained. For example, on one ASIC, when a packet is received at a port, the switch decides to which port to transmit the packet. In one embodiment, the corresponding entry in the port bitmap table that allows for transmit is set to zero for restricted ports and to one for allowed ports.

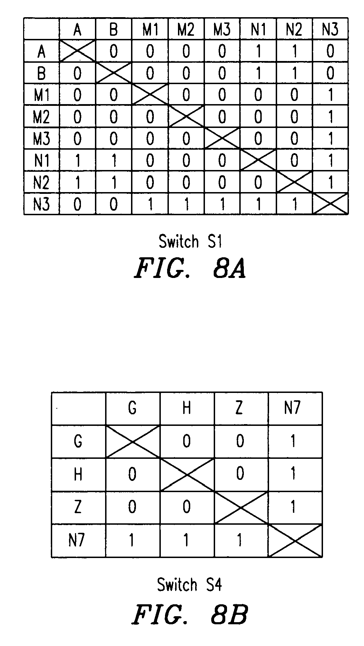

FIGs. 8A and 8B illustrate exemplary bitmap tables for the ports of the switches S1 and S4, respectively, of FIG. 3 when those switches are configured as illustrated in that figure. A one in an entry indicates that interaction is allowed between the corresponding ports; a zero indicates that interaction is not allowed. For example, as illustrated in FIG. 8A, interaction is not allowed between user ports A and B, as indicated by a zero in the corresponding entries for those ports, while interaction is allowed between user port A and network port N1, as indicated by a one in the corresponding entries for those ports.

The following method, the following system as well as the following features, separately or in any combination, may also constitute advantageous embodiments of the described or claimed invention:
- A method of implementing a port mapping technique in a switch of a communications network, the switch comprising a plurality of ports, the method comprising: identifying a first portion of the ports as user ports; identifying a second portion of the ports as network ports; assigning a plurality of the user ports to a first session; preventing user ports assigned to the first session from interacting with one another; and permitting the user ports assigned to the first session to interact with ports not assigned to the first session as long as none of the network ports is assigned to the first session.
- The claimed and/or described method further comprising: assigning one of the network ports to the first session; and preventing the user ports assigned to the first session from interacting with network ports other than the network port assigned to the first session.
- The claimed and/or described method further comprising assigning a plurality of the network ports to the first session.
- The claimed and/or described method wherein the first session is a unidirectional session, the method further comprising permitting the network ports assigned to the first session to interact with one another.
- The claimed and/or described method wherein the first session is a bidirectional session, the method further comprising preventing the network ports assigned to the first session from interacting with one another.
- A system for implementing a port mapping technique in a switch of a communications network, the switch comprising user ports for connecting to user devices and network ports for connecting to network devices, the system comprising: means for assigning a plurality of the user ports to a first session; and means for preventing user ports assigned to the first session from interacting with one another.
- The claimed and/or described system further comprising means for permitting the user ports assigned to the first session to interact with user ports and network ports that are not assigned to the first session as long as none of the network ports is assigned to the first session.
- The claimed and/or described system wherein the means for preventing and means for permitting comprise entries in a bitmap table for the switch.
- The claimed and/or described system further comprising: means for assigning one of the network ports to the first session; and means for preventing the user ports assigned to the first session from interacting with network ports other than the network port assigned to the first session.
- The claimed and/or described system further comprising: means for assigning a plurality of the user ports to a second session; and means for preventing the user ports assigned to the second session from communicating with one another.
- The claimed and/or described system further comprising means for assigning a plurality of the network ports to the first session.
- The claimed and/or described system wherein the first session is a unidirectional session, the system further comprising means for permitting the network ports assigned to the first session to interact with one another.
- The claimed and/or described system wherein the first session is a bidirectional session, the system further comprising means for preventing the network ports assigned to the first session from interacting with one another.
- The claimed and/or described system wherein the means for preventing user ports assigned to the same session from interacting with one another comprises means for preventing a packet received by the switch at a first one of the user ports assigned to a session from being transmitted from the switch via a second one of the user ports assigned to the same session.
- The claimed and/or described system wherein the means for preventing comprises an entry in a bitmap table for the switch.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method of implementing a port mapping technique in a switch of a communications network, the switch comprising a plurality of ports including user ports and network ports, the method comprising:
identifying a first portion of the ports as user ports;
identifying a second portion of the ports as network ports;
assigning a plurality of the user ports to a first session; and
preventing user ports assigned to the first session from interacting with one another.

2. The method of claim 1 further comprising permitting the user ports assigned to the first session to interact with ports not assigned to the first session as long as none of the network ports is assigned to the first session.

3. The method of claim 1 further comprising:
assigning one of the network ports to the first session; and
preventing the user ports assigned to the first session from interacting with network ports other than the network port assigned to the first session.

4. The method of claim 1 further comprising:
assigning a plurality of the user ports to a second session; and
preventing the network ports assigned to the second session from interacting with one another.

5. The method of claim 1 further comprising assigning a plurality of the network ports to the first session.

6. The method of claim 1 wherein the first session is a unidirectional session, the method further comprising permitting the network ports assigned to the first session to interact with one another.

7. The method of claim 1 wherein the first session is a bidirectional session, the method further comprising preventing the network ports assigned to the first session from interacting with one another.

8. The method of claim 1 wherein the preventing user ports assigned to the same session from interacting with one another comprises preventing a packet received by the switch at a first one of the user ports assigned to a session from being transmitted from the switch via a second one of the user ports assigned to the same session.

9. The method of claim 1 wherein the user ports are connectable to user devices.

10. The method of claim 1 wherein the network ports are connectable to other switches in the communications network.
